# EUROPÄISCHE PATENTSCHRIFT

(11) **EP 0 821 533 B1**
(45) Veröffentlichungstag und Bekanntmachung des Hinweises auf die Patenterteilung: **19.01.2005**
(21) Anmeldenummer: 97112293.2
(22) Anmeldetag: 17.07.1997
(51) Int. Cl.: H04Q 3/545

(54) **Verfahren zum Laden einer Befehlsfolge in einer Telekommunikationsanlage**
Method for loading an instruction sequence in a telecommunications exchange
Procédé pour charger une séquence d'instructions dans un central de télécommunications

(30) Priorität: 18.07.1996 DE 19629058
(43) Veröffentlichungstag der Anmeldung: 28.01.1998
(73) Patentinhaber: SIEMENS AKTIENGESELLSCHAFT, 80333 München (DE)
(72) Erfinder: Gericke, Harald, 46119 Oberhausen (DE); Köninger, Reinhard, 45894 Gelsenkirchen (DE)

(56) Entgegenhaltungen:
- DE-A- 4 310 558
- DE-A- 4 414 597
- RUGHEIMER M K ET AL: "CONFIGURABLE SOFTWARE FOR ADVANCED TELEPHONY APPLICATIONS" INTERNATIONAL CONFERENCE ON COMMUNICATIONS, IEEE, Bd. 3, 12. - 15. Juni 1988, Seiten 1312-1316, XP000124778 PHILADELPHIA, PA

## Beschreibung

Die Erfindung betrifft ein Verfahren zum Betreiben einer Telekommunikationsanlage, in der Datenverbindungen zwischen mindestens zwei an die Telekommunikationsanlage angeschlossenen Teilnehmern geschaltet werden. In einem Befehlsspeicher einer Grundbaugruppe für eine erste Gruppe von Teilnehmern wird mindestens eine Quell-Befehlsfolge gespeichert, bei deren Ausführung durch einen in der Grundbaugruppe enthaltenen Zentral-Mikroprozessor mindestens ein Funktionsmodul der Grundbaugruppe ansteuerbar ist. Dieses Funktionsmodul realisiert zumindest eine Teilfunktion für die Kommunikation in der Telekommunikationsanlage.

Telekommunikationsanlagen sind Vermittlungseinrichtungen, die entweder eine gebührenfreie Vermittlung von Verbindungen innerhalb des Privatgeländes eines Betreibers der Telekommunikationsanlage ermöglichen oder die Vermittlungsfunktionen im öffentlichen Telekommunikationsnetz als Telekommunikationsstellen, wie z.B. Orts- oder Fernvermittlungsstellen, übernehmen. Die Telekommunikationsanlage dient in der Regel zum Schalten von Datenverbindungen für den Telefondienst und für andere Telekommunikationsdienste, wie z.B. Datenübertragung mit DATEX-P.

Bekannt sind Telekommunikationsanlagen, die je nach Anzahl der angeschlossenen Teilnehmer in mindestens zwei Ausbaustufen hergestellt werden. An einer Grundbaugruppe ist eine erste Gruppe von Teilnehmern angeschlossen, z.B. 100 Teilnehmer. Um eine Anpassung der Grundbaugruppe an verschiedene Bedürfnisse des Betreibers der Telekommunikationsanlage zu ermöglichen, können bestimmte Funktionsmodule in der Grundbaugruppe aktiviert werden. Zu diesen Funktionsmodulen zählen z.B. Module zum Anschließen analoger Teilnehmer, Module zum Anschließen digitaler Teilnehmer und ISDN-Module.

Im Befehlsspeicher der Grundbaugruppe ist für jedes der Funktionsmodule eine Befehlsfolge abgelegt. Ist das jeweilige Funktionsmodul auf der Grundbaugruppe aktiviert, wird die zugehörige Befehlsfolge auch durch den Zentral-Mikroprozessor ausgeführt. Der Befehlsspeicher der Grundbaugruppe ist aufgrund der Vielzahl von möglichen Funktionsmodulen relativ groß, z.B. 20 MB.

Zum Erweitern der Telekommunikationsanlage in einer zweiten Ausbaustufe wird mit der Grundbaugruppe eine Erweiterungsbaugruppe für eine weitere Gruppe von Teilnehmern verbunden. Auf der Erweiterungsbaugruppe können je nach Anforderung des Betreibers weitere Funktionsmodule aktiviert werden. Die Erweiterungsbaugruppe wird durch einen weiteren Mikroprozessor gesteuert. Die Befehlsfolgen für den weiteren Mikroprozessor werden bei bekannten Telekommunikationsanlagen zusätzlich zu den Befehlsfolgen für den Zentral-Mikroprozessor im Befehlsspeicher der Grundbaugruppe gespeichert und beim Aktivieren der Erweiterungsbaugruppe in einen Befehlsspeicher der Erweiterungsbaugruppe kopiert. Der Befehlsspeicher der Grundbaugruppe muß demnach relativ groß sein

Die Druckschrift Rugheimer M K et al.: "Configurable software for advanced telephony applications", International Conference on Communications, IEEE, Bd. 3, 12.-15. Juni 1988, Seiten 1312 - 1316, XP000124778 Philadelphia, PA, zeigt ein Verfahren und eine Anordnung zur Bereitstellung von Betriebssoftware für eine verteilte Telekommunikationsanordnung. In der Telekommunikationsanordnung wird eine Mehrzahl von Mikroprozessoren unterschiedlichen Typs und mit unterschiedlicher Hardware-Peripherie betrieben. Um diese verschiedenen Mikroprozessoren mit ihrer jeweiligen Peripherie mit Betriebs-Software zu versehen, wird ein zentraler Programmdatenspeicher vorgesehen, in dem Programm-Module in Form von Funktionsblöcken gespeichert sind. Die hierbei gespeicherten Funktionsblöcke decken alle in der verteilten Telekommunikationsanordnung verwendeten Mikroprozessoren und deren mögliche Peripherie ab. Die einzelnen Mikroprozessoren in der verteilten Telekommunikationsanordnung werden dann mit Betriebs-Software versorgt, indem die jeweils benötigten Funktionsblöcke aus dem zentralen Programmcode-Speicher abgerufen und zu einem funktionsfähigen Programm zusammengefügt ("gelinkt") werden.

Aufgabe der Erfindung ist es, ein einfaches Verfahren zum Betreiben einer Telekommunikationsanlage anzugeben, das mit geringem Speicherbedarf auskommmt.

Diese Aufgabe wird durch ein Verfahren mit den Merkmalen des Patentanspruchs 1 gelöst. Die Erfindung geht von der Erkenntnis aus, daß auf der Erweiterungsbaugruppe im wesentlichen die gleichen Funktionsmodule zur Auswahl stehen, wie auf der Grundbaugruppe. Deshalb wird bei der Erfindung auf separate Befehlsfolgen für die Funktionsmodule der Erweiterungsbaugruppe im Befehlsspeicher der Grundbaugruppe verzichtet. Bei der Erfindung wird eine durch den Zentral-Mikroprozessor ausführbare Quell-Befehlsfolge im Befehlsspeicher der Grundbaugruppe in einen Befehlsspeicher einer Erweiterungsbaugruppe für eine weitere Gruppe von Teilnehmern kopiert. Durch diese Maßnahme entfällt bei der Erfindung Speicherplatz für Befehlsfolgen, die ausschließlich auf der Erweiterungsbaugruppe ausgeführt werden. Somit kann der Befehlsspeicher der Grundbaugruppe kleiner ausgeführt werden oder zusätzliche Befehlsfolgen für die Realisierung neuer Anwendungen aufnehmen.

Da nur noch eine einzige Befehlsfolge für jedes Funktionsmodul im Befehlsspeicher der Grundbaugruppe gespeichert werden muß, verringert sich auch der Aufwand zum Erstellen und zur Pflege der Befehlsfolgen, da z.B. Änderungen nur noch in einer Befehlsfolge für ein Funktionsmodul durchgeführt werden müssen. Auch der Aufwand für Dokumentation und Testläufe halbiert sich, da jeweils nur noch eine Befehlsfolge pro Funktionsmodul dokumentiert und getestet werden muß.

Durch das Kopieren der Befehlsfolge von der Grundbaugruppe auf die Erweiterungsbaugruppe wird gewährleistet, daß ein späteres Verändern der Befehlsfolge erleichtert ist. Die umgestellte Befehlsfolge muß lediglich im Befehlsspeicher der Grundbaugruppe verändert werden. Bei Wiederinbetriebnahme der Telekommunikationsanlage wird die geänderte Befehlsfolge automatisch kopiert und in den Befehlsspeicher der Erweiterungsbaugruppe übernommen.

In einem Ausführungsbeispiel der Erfindung erfolgt das Kopieren nur dann, wenn die Befehlsfolge nicht bereits im Befehlsspeicher der Erweiterungsbaugruppe gespeichert ist. Durch diese Maßnahme wird erreicht, daß ein doppeltes Kopieren unterbleibt. Der entstehende Freiraum kann für andere Aufgaben verwendet werden. Bei einer Wiederinbetriebnahme der Telekommunikationsanlage z.B. nach einem Spannungsausfall wird eine schnelle Inbetriebnahme erreicht, da bereits kopierte Befehlsfolgen nicht noch einmal in die Erweiterungsbaugruppe kopiert werden.

Erfolgt das Kopieren nur dann, wenn das zur jeweiligen Befehlsfolge gehörende Funktionsmodul auf der Erweiterungsbaugruppe aktiviert wird, so läßt sich aufgrund der folgenden Überlegungen eine weitere Speicherplatzeinsparung bezüglich des Befehlsspeichers auf der Erweiterungsbaugruppe erzielen. Auf der Erweiterungsbaugruppe kann aus konstruktiven Gründen nur eine maximale Anzahl von Funktionsmodulen aktivert werden. Werden nur die Befehlsfolgen kopiert, für die auch Funktionsmodule auf der Erweiterungsbaugruppe aktiviert sind, so läßt sich die Größe des Befehlsspeichers auf der Erweiterungsbaugruppe abschätzen. Befehlsfolgen, die nicht auf der Erweiterungsbaugruppe benötigt werden, da zugehörige Funktionsmodule nicht aktiviert sind, müssen nicht im Befehlsspeicher der Erweiterungsbaugruppe gespeichert werden, so daß der dafür notwendige Speicherplatz entfällt. Der Befehlsspeicher auf der Erweiterungsbaugruppe kann somit kleiner ausgeführt werden oder zusätzliche Befehlsfolgen für andere Anwendungen enthalten. Außerdem beschleunigt sich die Inbetriebnahme bzw. Wiederinbetriebnahme, da nur einige der möglichen Befehlsfolgen in den Befehlsspeicher der Erweiterungsbaugruppe kopiert werden.

Um einen anderen Datenbereich für die kopierte Befehlsfolge zu benutzen als für die Quell-Befehlsfolge, wird in einem Ausführungsbeispiel der Erfindung eine Umschaltung der Adressen des Datenspeichers auf der Erweiterungsbaugruppe durchgeführt. Diese Adreßumschaltung kann durch eine Schaltungseinheit oder durch eine zusätzliche Befehlsfolge erfolgen. Durch diese Maßnahme wird erreicht, daß die Lage des Datenbereiches auf der Erweiterungsbaugruppe relativ frei gewählt werden kann, so daß sich beim Entwurf mehr Freiheitsgrade ergeben.

Im folgenden werden Ausführungsbeispiele der Erfindung anhand der beiliegenden Figuren erläutert und dabei zeigen:
- Fig. 1: wesentliche elektronische Funktionseinheiten einer Telekommunikationsanlage,
- Fig. 2: eine erste Speicherbelegung im Befehlsspeicher der Grundbaugruppe und im Befehlsspeicher der Erweiterungsbaugruppe,
- Fig. 3: eine zweite Speicherbelegung im Befehlsspeicher der Grundbaugruppe und im Befehlsspeicher der Erweiterungsbaugruppe, und
- Fig. 4: ein Flußdiagramm des Verfahrensablaufs in einem Ausführungsbeispiel der Erfindung.

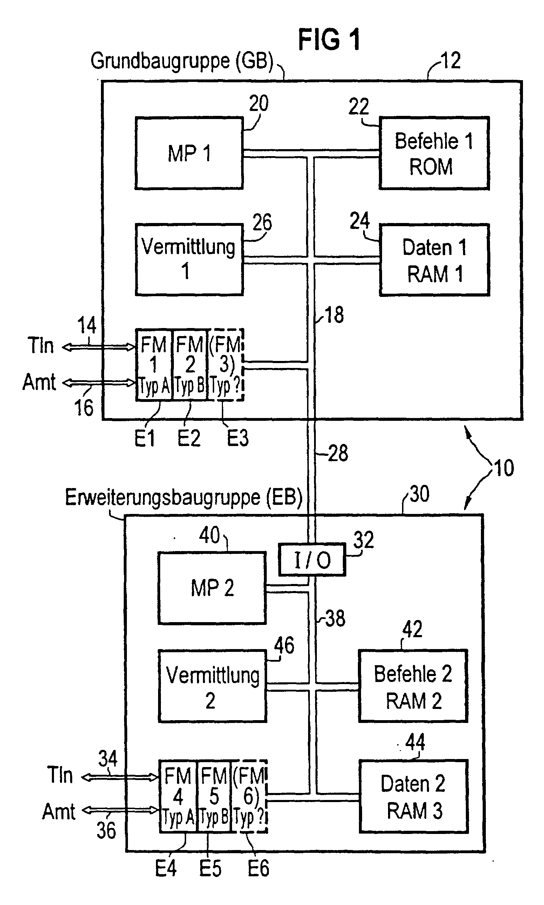

Fig. 1 zeigt schematisch die wesentlichen elektronischen Funktionseinheiten einer Telekommunikationsanlage 10. Die Telekommunikationsanlage 10 enthält für eine erste Ausbaustufe eine Grundbaugruppe 12 an die über Anschlußleitungen 14 eine erste Gruppe von Teilnehmern direkt angeschlossen ist. Zwischen diesen Teilnehmern kann eine gebührenfreie Vermittlung von Verbindungen erfolgen. Über Anschlußleitungen 16 ist die Grundbaugruppe 12 mit mindestens einer öffentlichen Vermittlungsstelle in einem Amt verbunden. Somit kann auch eine gebührenpflichtige Kommunikation der Teilnehmer der ersten Gruppe mit indirekt angeschlossenen Teilnehmern des öffentlichen Netzes erfolgen.

Die Anschlußleitungen 14 sind über ein Funktionsmodul FM1 mit einem Bussystems 18 der Grundbaugruppe 12 verbunden. Das Funktionsmodul FM1 wird in einem Einschub E1 aufgenommen. Die Anschlußleitungen 16 werden über ein Funktionsmodul FM2 mit dem Bussystem 18 der Grundbaugruppe 12 verbunden. Das Funktionsmodul FM2 wird in einem Einschub E2 auf der Grundbaugruppe 12 aufgenommen. In einem Einschub E3 kann der Betreiber der Telekommunikationsanlage 10 ein weiteres Funktionsmodul einschieben. Dieses Funktionsmodul könnte z.B. eine ISDN-Anschlußeinheit sein. Das Bussystem 18 enthält Adreßleitungen, Datenleitungen und Steuerleitungen, die zum Großteil mit einem Mikroprozessor 20 verbunden sind.

Die Grundbaugruppe 12 wird vom Mikroprozessor 20 gesteuert, der Befehle ausführt, die in einem ebenfalls am Bussystem 18 angeschlossenen Befehlsspeicher 22 gespeichert sind. Der Befehlsspeicher 22 ist ein Festwertspeicher (ROM). In einem Datenspeicher 24 werden Daten gespeichert, die beim Ausführen der Befehle im Befehlsspeicher 22 benötigt werden. Zu diesen Daten gehören z.B. Informationen über die jeweilige Verbindung zwischen den Teilnehmern, wie z.B. die Größe der Dämpfung auf den Leitungen zwischen den Teilnehmern. Der Datenspeicher 24 ist ebenfalls an das Bussystem 18 angeschlossen.

An das Bussystem 18 ist außerdem eine Vermittlungeinheit 26 angeschlossen, die ein Schalten der Datenverbindung zwischen den Teilnehmern ermöglicht. Auf der Grundbaugruppe 12 sind weiterhin nicht dargestellte Einheiten für die Grundfunktionen der Telekommunikationsanlage 10 vorhanden, wie z.B. eine Takterzeugung oder eine Ruftonerzeugung. Die Grundbaugruppe 12 hat einen relativ großen Befehlsspeicher 22 von z.B. 20 MB.

Über Verbindungsleitungen 28 ist die Grundbaugruppe 12 mit einer Erweiterungsbaugruppe 30 für eine zweite Ausbaustufe der Telekommunikationsanlage 10 verbunden. Die Verbindungsleitungen 28 verbinden das Bussystem 18 mit einer elektronischen Schnittstelle 32, über die Daten zwischen der Grundbaugruppe 12 und der Erweiterungsbaugruppe 30 ausgetauscht werden können.

An die Erweiterungsbaugruppe 30 ist eine zweite Gruppe von Teilnehmern über Anschlußleitungen 34 angeschlossen. Anschlußleitungen 36 sind mit der genannten oder einer weiteren öffentlichen Vermittlungsstelle verbunden.

Die Anschlußleitungen 34 sind über ein Funktionsmodul FM4 mit einem Bussystem 38 der Erweiterungsbaugruppe 30 verbunden. Das Funktionsmodul FM4 wird in einem Einschub E4 auf der Erweiterungsbaugruppe 30 aufgenommen. Das Funktionsmodul FM4 ist identisch wie das Funktionsmodul FM1 aufgebaut. Die Anschlußleitungen 36 werden über ein Funktionsmodul FM5 mit dem Bussystem 38 verbunden. Das Funktionsmodul FM5 wird in einem Einschub E5 aufgenommen und ist identisch wie das Funktionsmodul FM2 aufgebaut. In einem Einschub E6 kann der Betreiber der Telekommunikationsanlage 10 zusätzliche Funktionsmodule einschieben.

Die Erweiterungsbaugruppe 30 wird von einem Mikroprozessor 40 gesteuert, so daß die Erweiterungsbaugruppe 30 ein separates Mikroprozessorsystem bildet. Der Mikroprozessor 40 führt Befehle aus, die in einem am Bussystem 18 angeschlossenen Befehlsspeicher 42 gespeichert sind. Zumindest ein Teil der im Befehlsspeicher 42 enthaltenen Befehle wird bei in Inbetriebnahme der Telekommunikationsanlage 10 aus dem Befehlsspeicher 22 in den Befehlsspeicher 42 kopiert. Der Befehlsspeicher 42 ist z.B. ein flüchtiger Speicher (RAM). In einem Datenspeicher 44 werden Daten gespeichert, die beim Ausführen der Befehle im Befehlsspeicher 42 benötigt werden. Diese Daten beziehen sich auf die Verbindung zwischen den Teilnehmern der weiteren Gruppe. Der Datenspeicher 44 ist ebenfalls mit dem Bussystem 38 verbunden.

Außerdem ist mit dem Bussystem 38 eine Vermittlungseinheit 46 verbunden, die im wesentlichen die gleichen Aufgaben hat, wie die Vermittlungseinheit 26.

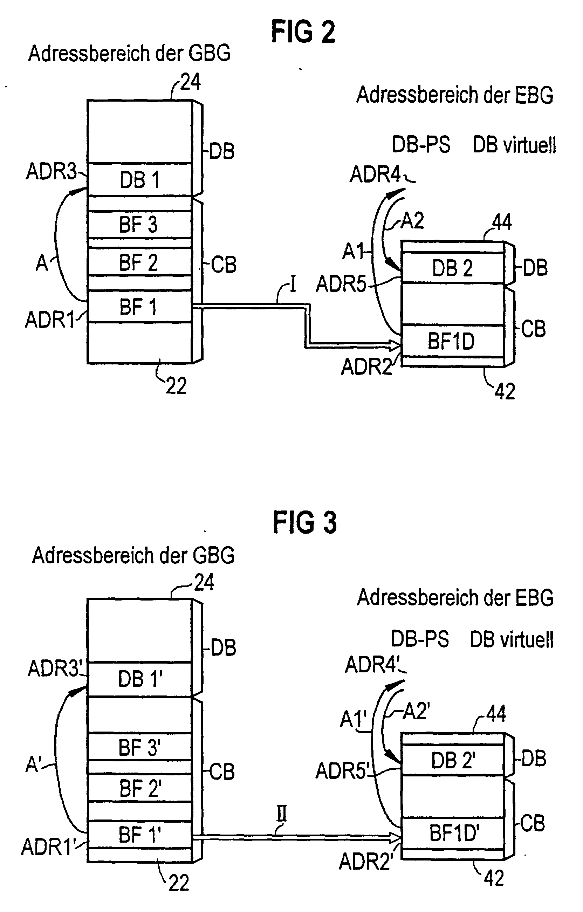

Fig. 2 zeigt eine erste Speicherbelegung im Befehlsspeicher 22 der Grundbaugruppe 12 und im Befehlsspeicher 42 der Erweiterungsbaugruppe 30 in einem ersten Ausführungsbeispiel der Erfindung. Im Befehlsspeicher 22 ist eine Befehlsfolge BF1 abgespeichert, die vom Mikroprozessor 20 ausgeführt wird, um das Funktionsmodul FM1 anzusteuern. Beim Ausführen der Befehlsfolge BF1 wird auf einen Datenbereich DB1 im Datenspeicher 24 zugegriffen, der an einem Adreßwert ADR3 beginnt (vgl. Pfeil A). Der Befehlsspeicher 22 enthält außerdem einen Befehlsfolge BF2, die durch den Mikroprozessor 20 ausgeführt wird, wenn das Funktionsmodul FM2 angesteuert wird. Eine im Speicher 22 enthaltene Befehlsfolge BF3 ist zwar durch den Mikroprozessor 20 ausführbar, wird aber bei der in Fig. 1 gezeigten Ausbaustufe der Grundbaugruppe 12 nicht durch den Mikroprozessor 20 abgearbeitet, da ein zugehöriges Funktionsmodul FM3 auf der Grundbaugruppe 12 nicht aktiviert ist.

Bei Inbetriebnahme der Telekommunikationsanlage 10 wird die Befehlsfolge BF1 aus dem Befehlsspeicher 22 der Grundbaugruppe 12 in den Befehlsspeicher 42 der Erweiterungsbaugruppe 30 kopiert (vgl. Pfeil I). Die kopierte Befehlsfolge wird als Befehlsfolge BF1D bezeichnet. Die Befehlsfolge BF1D wird durch den Mikroprozessor 40 der Erweiterungsbaugruppe 30 ausgeführt, um das Funktionsmodul FM4 anzusteuern. Da die Befehlsfolge BF1 und somit auch die Befehlsfolge BF1D so erstellt wurden, daß sie unabhängig von ihrer Lage im Befehlsspeicher 22 bzw. im Befehlsspeicher 42 ausgeführt werden können, müssen die Adressen der Befehle der Befehlsfolge BF1 und der Befehlsfolge BF1D nicht unbedingt übereinstimmen. In Fig. 2 beginnt die Befehlsfolge BF1 mit einem Adreßwert ADR1 und die Befehlsfolge BF1D beginnt mit einem Adreßwert ADR2. Der Adreßwert ADR2 ist dabei kleiner als der Adreßwert ADR1.

Beim Ausführen der Befehlsfolge BF1D durch den Mikroprozessor 40 versucht der Mikroprozessor 40 auf einen Datenbereich DB2 zuzugreifen, der an einem Adreßwert ADR4 beginnt (vgl. Pfeil A1). Der Adreßwert ADR4 ist gleich groß wie ein Adreßwert ADR3 im Datenbereich DB1 des Datenspeichers 24. Da auf der Erweiterungsbaugruppe 30 der Datenspeicher 44 aber mit einem Adreßwert ADR5 beginnt, wird durch eine einfache kombinatorische Schaltung der Adreßwert ADR4 auf der Erweiterungsbaugruppe 30 in den Adreßwert ADR5 umgerechnet, ebenso wie andere Adreßwerte für den Zugriff auf Daten im Datenspeicher 44 (vgl. Pfeil A2). Damit kann das Funktionsmodul FM4 angesteuert werden, obwohl der Datenspeicher 44 einen anderen Adreßbereich hat als der Datenspeicher 24.

Auch die Befehlsfolge BF2 wird bei Inbetriebnahme der Telekommunikationsanlage 10 aus dem Befehlsspeicher 22 in den Befehlsspeicher 42 kopiert (nicht dargestellt in Fig. 2). Die Befehlsfolge BF3 im Befehlsspeicher 22 wird jedoch nicht in den Befehlsspeicher 42 der Erweiterungsbaugruppe 30 kopiert, da ein dem Funktionsmodul FM3 gleichartiges Funktionsmodul FM6 auf der Erweiterungsbaugruppe 30 nicht vorhanden ist.

Fig. 3 zeigt eine zweite Speicherbelegung im Befehlsspeicher 22 der Grundbaugruppe 12 und im Befehlsspeicher 42 der Erweiterungsbaugruppe 30 in einem zweiten Ausführungsbeispiel der Erfindung. Eine Befehlsfolge BF1' beginnend an einem Adreßwert ADR1' ist im Befehlsspeicher 22 gespeichert. Beim Ausführen der Befehlsfolge BF1' durch den Mikroprozessor 20 werden Daten in einem an einer Adresse ADR3' beginnenden Datenbereich DB1' des Datenspeichers 24 verwendet (vgl. Pfeil A'), um das Funktionsmodul FM1 anzusteuern. Der Befehlsspeicher 22 enthält außerdem eine Befehlsfolge BF2' zur Ansteuerung des Funktionsmoduls FM2 und einen Befehlsfolge BF3', die jedoch nicht ausgeführt wird, da ein Funktionsmodul FM3 nicht auf der Grundbaugruppe 12 aktiviert ist.

Bei Inbetriebnahme der Telekommunikationsanlage 10 wird die Befehlsfolge BF1' aus dem Befehlsspeicher 22 in den Befehlsspeicher 42 der Erweiterungsbaugruppe 30 kopiert (Pfeil II). Die kopierte Befehlsfolge wird im folgenden mit BF1D' bezeichnet. Die Befehlsfolge BF1D' beginnt im Befehlsspeicher 42 an einem Adreßwert ADR2'. Der Adreßwert ADR1' und der Adreßwert ADR2' sind identisch. Demzufolge kann die Befehlsfolge BF1' und damit die Befehlsfolge BF1D' sowohl relokierbare Code enthalten als auch nicht relokierbare Code. Beim Ausführen der Befehlsfolge BF1D' durch den Mikroprozessor 40 wird das Funktionsmodul FM4 angesteuert. Findet ein dem Datenzugriff A' äquivalenter Datenzugriff A1' statt, so befindet sich im Befehlsregister des Mikroprozessors 40 ein Adreßwert ADR4', der mit dem Adreßwert ADR3' identisch ist. Der Datenspeicher 44 umfaßt jedoch einen anderen Adreßbereich als der Datenspeicher 24. Um den Datenzugriff A1' trotzdem zu ermöglichen, wird durch eine einfache kombinatorische Schaltung der Adreßwert ADR4' in einen Adreßwert ADR5' umgewandelt (Pfeil A2').

Auch die Befehlsfolge BF2' wird bei Inbetriebnahme der Telekommunikationsanlage 10 in den Befehlsspeicher 42 der Erweiterungsbaugruppe 30 kopiert (nicht dargestellt in Fig. 3).

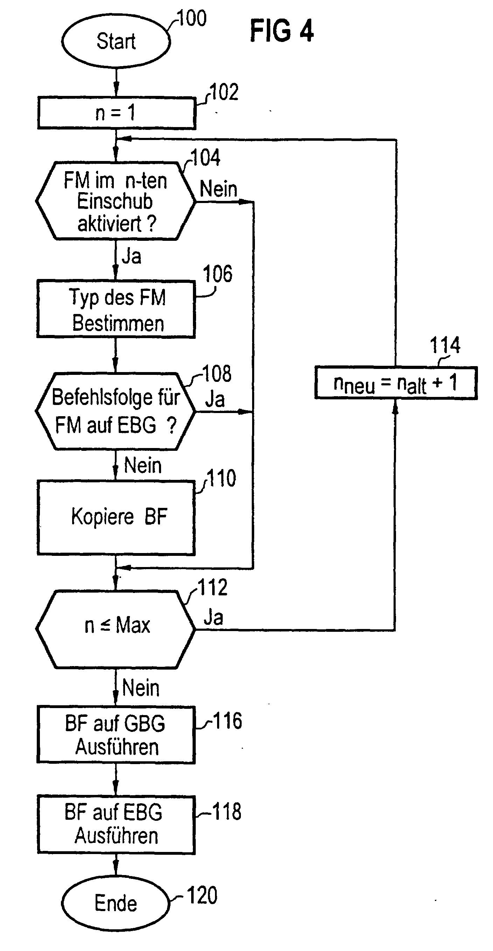

Fig. 4 zeigt ein Flußdiagramm des Verfahrens nach der Erfindung für das erste und das zweite Ausführungsbeispiel. In einem Schritt 100 wird das Verfahren gestartet. In einem Schritt 102 wird ein Zähler auf den Wert 1 gesetzt.

Anschließend wird in einem Schritt 104 überprüft, ob sich im Einschub, der durch den Zählerwert bezeichnet wird, ein aktiviertes Funktionsmodul auf der Erweiterungsbaugruppe 30 befindet. Ist dies nicht der Fall, so wird das Verfahren in einem unten erläuterten Schritt 112 fortgesetzt. Ist das Funktionsmodul im durch den Zählerwert bestimmten Einschub der Erweiterungsbaugruppe aktiviert, so wird in einem Schritt 106 festgestellt, von welchem Typ dieses Funktionsmodul ist.

In einem Schritt 108 wird bestimmt, ob eine Befehlsfolge zum Ansteuern des im Schritt 106 ermittelten Funktionsmoduls bereits im Befehlsspeicher 42 der Erweiterungsbaugruppe 30 gespeichert ist. Ist dies der Fall, so wird das Verfahren mit dem unten erläuterten Schritt 112 fortgesetzt. Im anderen Fall wird das Verfahren im Schritt 110 fortgesetzt, indem die Befehlsfolge zum im Schritt 106 ermittelten Funktionsmodul aus dem Befehlsspeicher 22 der Grundbaugruppe 12 in den Befehlsspeicher 42 der Erweiterungsbaugruppe 30 kopiert wird.

Anschließend wird das Verfahren im Schritt 112 fortgesetzt. Im Schritt 112 wird geprüft, ob der Zählerwert kleiner oder gleich der Anzahl von Einschüben auf der Erweiterungsbaugruppe 30 ist. Ist der Zählerwert kleiner oder gleich dieser Anzahl, so wird der Zählerwert in einem Schritt 114 um den Wert 1 erhöht und das Verfahren in einer Schleife aus den Verfahrensschritten 104 bis 114 fortgesetzt.

Die Schleife aus den Verfahrensschritten 104 bis 114 kann nur verlassen werden, wenn im Schritt 112 festgestellt wird, daß bereits für alle Einschübe auf der Erweiterungsbaugruppe 30 eine Prüfung nach einem aktiven Funktionsmodul im jeweiligen Einschub durchgeführt wurde. In diesem Fall ist der Zählerwert größer als die Anzahl von Einschüben auf der Erweiterungsbaugruppe 30. Das Verfahren wird in diesem Fall mit einem Schritt 116 fortgesetzt, indem z.B. eine der Befehlsfolgen auf der Grundbaugruppe ausgeführt wird. In einem Schritt 118 wird auch eine der Befehlsfolgen auf der Erweiterungsbaugruppe ausgeführt.

Das in Fig. 4 gezeigte Verfahren wird in einem Schritt 120 beendet.

## Patentansprüche

1. Verfahren zum Laden einer Befehlsfolge (BF1) von einer Grundbaugruppe (12) in einen Befehlsspeicher (42) einer an diese angeschlossenen Erweiterungsbaugruppe (30) einer Telekommunikationsanlage, wobei die Befehlsfolge (BF1)
- auf der Grundbaugruppe (12) von einem Zentral-Mikroprozessor (20) ausgeführt wird und zur Ausführung durch einen weiteren Mikroprozessor (40) auf der Erweiterungsbaugruppe (30) ausgewählt wird,
- für Datenzugriffe einen an einer ersten physikalischen Anfangsadresse (ADR3) auf der Grundbaugruppe (12) befindlichen Datenspeicherbereich (DB1) vorsieht,
- von einem Befehlsspeicher (22) der Grundbaugruppe (12) in den Befehlsspeicher (42) der Erweiterungsbaugruppe (30) kopiert wird,
- wobei für die Erweiterungsbaugruppe (30), deren Datenspeicherbereich (DB2) eine von der des Datenspeicherbereiches (DB1) auf der Grundbaugruppe (12) sich unterscheidende physikalische Anfangsadresse (ADR5) aufweist, die für Datenzugriffe vom weiteren Mikroprozessor (40) auszugebenden oder ausgegebenen physikalischen Adressen zur Selektierung des auf der Erweiterungsbaugruppe (30) befindlichen Datenspeicherbereiches (DB2) modifiziert werden.

2. Verfahren nach Anspruch 1,
**dadurch gekennzeichnet,**
**daß** die von dem weiteren Mikroprozessor (40) für Datenzugriffe ausgegebenen physikalischen Adressen (ADR3) durch eine außerhalb des weiteren Mikroprozessors (40) angeordnete Adress-Umsetzer-Einrichtung modifiziert werden.

3. Verfahren nach Anspruch 1,
**dadurch gekennzeichnet,**
**daß** die von dem weiteren Mikroprozessor (40) für Datenzugriffe auszugebenden physikalischen Adressen (ADR5) durch eine zum Beginn der Ausführung der kopierten Befehlsfolge (BF1D) vom weiteren Mikroprozessor (40) abgearbeitete Einstellsequenz modifiziert werden.

4. Verfahren nach einem der vorhergehenden Ansprüche,
**dadurch gekennzeichnet,**
**daß** das Kopieren der Befehlsfolge (BF1) unterbleibt, wenn diese im Befehlsspeicher (42) der Erweiterungsbaugruppe (30) bereits gespeichert ist.

5. Verfahren nach einem der vorhergehenden Ansprüche,
**dadurch gekennzeichnet,**
**daß** eine Befehlsfolge (BF1) dann kopiert wird, wenn ein auf der Erweiterungsbaugruppe (30) befindliches Funktionsmodul (FM4), zu dessen Steuerung dieser Befehlsfolge (BF1) erforderlich ist, in Betrieb genommen wird.

## Claims

1. Method for loading a command sequence (BF1) from a base module (12) into a command memory (42) of an extension module (30) of a telecommunications system connected thereto, wherein the command sequence (BF1)
- is executed on the base module (12) by a central microprocessor (20) and is selected for execution by a further microprocessor (40) on the extension module (30),
- provides for data accesses a data memory area (DB1) situated at a first physical start address (ADR3) on the base module (12),
- is copied from a command memory (22) of the base module (12) into the command memory (42) of the extension module (30),
- wherein for the extension module (30) whose data memory area (DB2) has a different physical start address (ADR5) from that of the data memory area (DB1) on the base module (12), the physical addresses output or to be output by the further microprocessor (40) for data accesses are modified for selecting the data memory area (DB2) situated on the extension module (30).

2. Method according to Claim 1, **characterized in that** the physical addresses (ADR3) output by the further microprocessor (40) for data accesses are modified by an address converter means arranged outside the further microprocessor (40).

3. Method according to Claim 1, **characterized in that** the physical addresses (ADR5) to be output by the further microprocessor (40) for data accesses are modified by a setting sequence processed by the further microprocessor (40) at the start of execution of the copied command sequence (BF1D).

4. Method according to one of the preceding claims, **characterized in that** copying of the command sequence (BF1) is not performed if said command sequence is already stored in the command memory (42) of the extension module (30).

5. Method according to one of the preceding claims, **characterized in that** a command sequence (BF1) is copied whenever a function module (FM4) which is situated on the extension module (30) and which requires said command sequence (BF1) for its control is put into operation.

## Revendications

1. Procédé pour charger une séquence d'instructions (BF1) d'un module de base (12) dans une mémoire d'instructions (42) d'un module d'extension (30), raccordé à ce module de base, d'une installation de télécommunication, dans lequel la séquence d'instructions (BF1)
- est exécutée sur le module de base (12) par un microprocesseur central (20) et est sélectionnée pour l'exécution par un autre microprocesseur (40) sur le module d'extension (30),
- prévoit pour des accès de données une zone de mémoire de données (DB1) se trouvant à une première adresse de début physique (ADR3) sur le module de base (12), et
- est copiée d'une mémoire d'instructions (22) du module de base (12) vers la mémoire d'instructions (42) du module d'extension (30),
- sachant que, pour le module d'extension (30) dont la mémoire de données (DB2) a une adresse de début physique (ADR5) différente de celle de la zone de mémoire de données (DB1) sur le module de base (12), les adresses physiques à délivrer ou délivrées par l'autre microprocesseur (40) pour des accès de données sont modifiées pour la sélection de la zone de mémoire de données (DB2) se trouvant sur le module d'extension (30).

2. Procédé selon la revendication 1,
**caractérisé par le fait que** les adresses physiques (ADR3) délivrées par l'autre microprocesseur (40) pour des accès de données sont modifiées par un dispositif convertisseur d'adresses agencé à l'extérieur de l'autre microprocesseur (40).

3. Procédé selon la revendication 1,
**caractérisé par le fait que** les adresses physiques (ADR5) à délivrer par l'autre microprocesseur (40) pour des accès de données sont modifiées par une séquence de réglage traitée par l'autre microprocesseur (40) au début de l'exécution de la séquence d'instructions copiée (BF1 D).

4. Procédé selon l'une des revendications précédentes,
**caractérisé par le fait que** la copie de la séquence d'instructions (BF1) ne se fait pas lorsque celle-ci est déjà mémorisée dans la mémoire d'instructions (42) du module d'extension (30).

5. Procédé selon l'une des revendications précédentes,
**caractérisé par le fait qu'**une séquence d'instructions (BF1) est copiée si un module fonctionnel (FM4), qui se trouve sur le module d'extension (30) et pour la commande duquel cette séquence d'instructions (BF1) est nécessaire, est mis en service.
